# EUROPEAN PATENT SPECIFICATION

(11) **EP 2 281 737 B1**
(45) Date of publication and mention of the grant of the patent: **27.11.2013**
(21) Application number: 10171174.5
(22) Date of filing: 29.07.2010
(51) Int. Cl.: B62K 11/04, B62K 19/46

(54) **Motorcycle**
Motorrad
Motocyclette

(30) Priority: 04.08.2009 JP 2009181960
(43) Date of publication of application: 09.02.2011
(73) Proprietor: Yamaha Hatsudoki Kabushiki Kaisha, Iwata-shi, Shizuoka 438-8501 (JP)
(72) Inventor: Isayama, Hiroyuki, Shizuoka-ken (JP)
(74) Representative: Grünecker, Kinkeldey, Stockmair & Schwanhäusser

(56) References cited:
- JP-A- 2008 265 734
- US-A1- 2007 023 216

## Description

### BACKGROUND OF THE INVENTION

### Field of the Invention

The present invention relates to motorcycles, and more specifically to a motorcycle which has a battery case provided integrally with a storage case.

### Description of the Related Art

Conventionally, there are motorcycles in which a seat is openable and closable, a storage case is provided below the seat for storage of maintenance tools and/or documents, etc. , a battery case is provided for storage of a battery, and the battery case is formed integrally with the storage case. For example Patent Document US 2007/0023216 A1 on which the preamble of claim 1 is based discloses a frame construction for a motorcycle which offers an increased rigidity portion for supporting a storage box. The frame has backstays connected between the main frame and the seat frame to provide triangle like connected frames. Patent Document JP 2008-265734A discloses a frame construction for a motorcycle which allows easy access of the screws and easy attachment of the engine parts. For example, Japanese Patent Publication of Examined Application H07-90814 and Japanese Patent Laid-Open H10-53177 disclose motorcycles in which the battery case extends downward from a bottom plate of the storage case. This arrangement enables to store a battery without decreasing the storage capacity of the storage case. Note, here, if the battery is disposed within the storage case, the battery takes up a volume inside the storage case and the storage case has a decreased storage capacity. By forming the battery case to extend downward from the bottom plate of the storage case, however, the capacity decrease in the storage case can be eliminated. Further, by forming the battery case to extend downward from the bottom plate of the storage case, it becomes possible to lower the motorcycle's center of gravity.

Conventionally, motorcycles include a mainframe which extends in an obliquely downward and rearward direction from a steering shaft, and a left-and-right pair of seat frames which extend in an obliquely upward and rearward direction from the mainframe. In this type of motorcycles, there are cases where a left-and-right pair of reinforcing frames are provided in order to increase frame rigidity. The reinforcing frames are provided like bridges for example, between the main frame and the pair of seat frames. There have been discussions for this type of motorcycles, to apply the above-described conventional arrangement of forming a battery case as a downward extension from the storage case bottom plate. Further, there have been discussions for lowering the bottom plate position along the reinforcing frames so that the storage case will have an increased storage capacity.

However, if the storage case bottom plate is placed at a lower position in the motorcycle which has a pair of reinforcing frames, there are cases where the battery case is located between the pair of reinforcing frames. In this case, the reinforcing frames become an obstacle in such operations as battery replacement and inspection, and reduce workability in these operations.

Also, in the motorcycle which has a pair of reinforcing frames, the reinforcing frames are obliquely above a rear wheel, which means that disposing the battery case between the reinforcing frames will position the battery case in close proximity to the rear wheel. For this reason, if the battery case is to be disposed between the two reinforcing frames, it is necessary to provide an especially large clearance between the battery case and the rear wheel in consideration of the rear wheel rotation while the motorcycle is running. In this case, the battery case must be down-sized, which means that the battery case must have a decreased storage capacity.

### SUMMARY OF THE INVENTION

Therefore, a primary object of the present invention is to provide a motorcycle having a storage case with an increased storage capacity without reducing operability in battery replacement, etc. , or reducing storage capacity of the battery case.

According to an aspect of the present invention, there is provided a motorcycle which includes a head pipe; a main frame extending from the head pipe in an obliquely rearward and downward direction; a pair of reinforcing frames disposed side by side in a left-and-right direction and extending from a rear portion of the main frame in an obliquely rearward and upward direction; and a pair of seat frames disposed side by side in the left-and-right direction and extending from the main frame in an obliquely rearward and upward direction to pass above the reinforcing frames in a side view. The reinforcing frames have their respective upper end portions connected with the seat frames. The motorcycle further includes: a rear wheel provided behind the main frame; a storage case provided at least between the seat frames; and a battery case extending downward from a bottom portion of the storage case and opening outward in a width direction of the motorcycle. The bottom portion includes: a first portion located along one of the reinforcing frames in the side view; ; and a second portion located on an outer side in the width direction than the other of the reinforcing frames. The battery case extends downward from the second portion, on said outer side in the width direction than said other of the reinforcing frames.

It should be noted here that the wording "along at least one of the reinforcing frames" does not only mean those cases where the first portion slopes at the same angle as said one of the reinforcing frames in a side view, but also includes cases where the first portion slopes at a different angle from the angle of the reinforcing frame; cases where the first portion is stepped; and cases where the first portion is curved in a side view.

According to the present invention, the bottom portion of the storage case includes the first portion, which lies along at least one of the reinforcing frames. In this case, the arrangement allows the bottom portion of the storage case to be located closely to at least said one reinforcing frame, which means it is possible to lower the position of the bottom portion. Hence, it is possible to increase the storage capacity of the storage case. Also, the battery case is located on an outer side than the other of the reinforcing frames in the motorcycle's width direction. In this case, the reinforcing frames are not an obstacle in such operations as replacing the battery, since no part of the reinforcing frames is on an outer side of the battery case in the motorcycle's width direction. This improves workability. Further, since the battery case is open outwardly widthwise of the motorcycle, the arrangement further improves workability. Also, since the battery case is located on an outer side than the other of the reinforcing frames, it is possible to provide a greater clearance between the battery case and the rear wheel than in cases where a battery case is provided between the pair of reinforcing frames. In this case, it is possible to increase the size of the battery case while ensuring a sufficient clearance between the battery case and the rear wheel. Thus, it is possible to increase the storage capacity of the battery case. Also, the second portion is located on an outer side than at least the other of the reinforcing frames in the motorcycle's width direction. In this case, the second portion can be used as a ceiling portion of the battery case, which simplifies the structure of battery case.

Preferably, the second portion is located above at least said other of the reinforcing frames in a side view. In this case, it is possible to give the battery case a sufficient height in an up-down direction since the second portion, which can be used as a ceiling portion of the battery case, is above at least said other of the reinforcing frames. The arrangement makes it possible to increase the size of the battery case sufficiently.

Preferably, the motorcycle further includes an inner bottom plate which is provided inside the storage case, covering above the bottom portion. In this case, tools, documents, etc. can be stored easily on the inner bottom plate. The arrangement makes it possible to reduce potential decrease in convenience of the storage case even in cases where the bottom portion of the storage case located at a low level necessitates a need for forming steps, recesses, projections or the like on the bottom portion.

Preferably, the motorcycle further includes a battery which is stored in the battery case; and an electric component connected with the battery. With this arrangement, the electric component is placed on the bottom portion of the storage case. In this case, the electric component and the battery are located in proximity to each other, making it easy to route wires for connecting the electric component with the battery.

Preferably, the bottom portion of the storage case includes a third portion located at a lower level than the second portion, and the third portion is at least on one side with respect to a center in the width direction of the motorcycle. With this arrangement, the battery case is on the other side with respect to the center, and the electric component is placed on the third portion. In this case, it is possible to put the load of electric component on one side of the bottom portion while putting the load of battery on the other side of the bottom portion. The arrangement makes it possible to prevent the loads from concentrating on one or the other side of the bottom portion in the storage case. As a result, the arrangement prevents imbalanced loading on the bottom portion of the storage case.

Preferably, the battery case is located at least laterally of a front end of said other reinforcing frame. Generally, a pair of reinforcing frames are laid so that they become apart from each other in a left-and-right direction starting from the rear portion of the main frame. Due to this layout, front ends of the reinforcing frames are located on an inner side in the width direction of the motorcycle than rear ends of the reinforcing frames. Therefore, by disposing the battery case laterally of the front end of the reinforcing frame, it becomes possible and easy, to give the battery case a large width (a dimension in the motorcycle's width direction) while preventing the motorcycle from having an increased width.

Preferably, the rear portion of the main frame bends to one side with respect to a center in the width direction of the motorcycle, and the battery case is on the other side with respect to the center. In order to reduce an increase in the width of the motorcycle, it is desirable that the battery case is placed closely to the center in the width direction of the motorcycle. According to the present motorcycle, the rear portion of the main frame is bent to one side. Therefore, it is possible to position the battery case more closely to the center in the width direction of the motorcycle than in cases where the rear portion of the main frame is on the center in the width direction of the motorcycle. As a result, it is possible to reduce an increase in the width of the motorcycle. Also, since the rear portion of the main frame is bent to one side, it is possible to ensure a large space for placement of the battery case. Thus, it is possible to increase the width of the battery case.

The above-described object and other objects, characteristics, aspects and advantages of the present invention will become clearer from the following detailed description of embodiments of the present invention with reference to the attached drawings.

### BRIEF DESCRIPTION OF THE DRAWINGS

Fig. 1 is a right side view of a motorcycle according to an embodiment of the present invention.
Fig. 2 is a plan view of a motorcycle frame.
Fig. 3 is a right side view of a region in the motorcycle, where a storage case is disposed. Fig. 3 does not show side covers or a seat.
Fig. 4 is a left side view of a region in the motorcycle, where the storage case is disposed. Fig. 4 does not show side covers or a seat.
Fig. 5 is a plan view of a storage case.
Fig. 6 is an end view taken in lines VI-VI in Fig. 5.
Fig. 7 is an end view taken in lines VII-VII in Fig. 5.
Fig. 8 is an end view taken in lines VIII-VIII in Fig. 5.

### DETAILED DESCRIPTION OF THE PREFERRED EMBODIMENTS

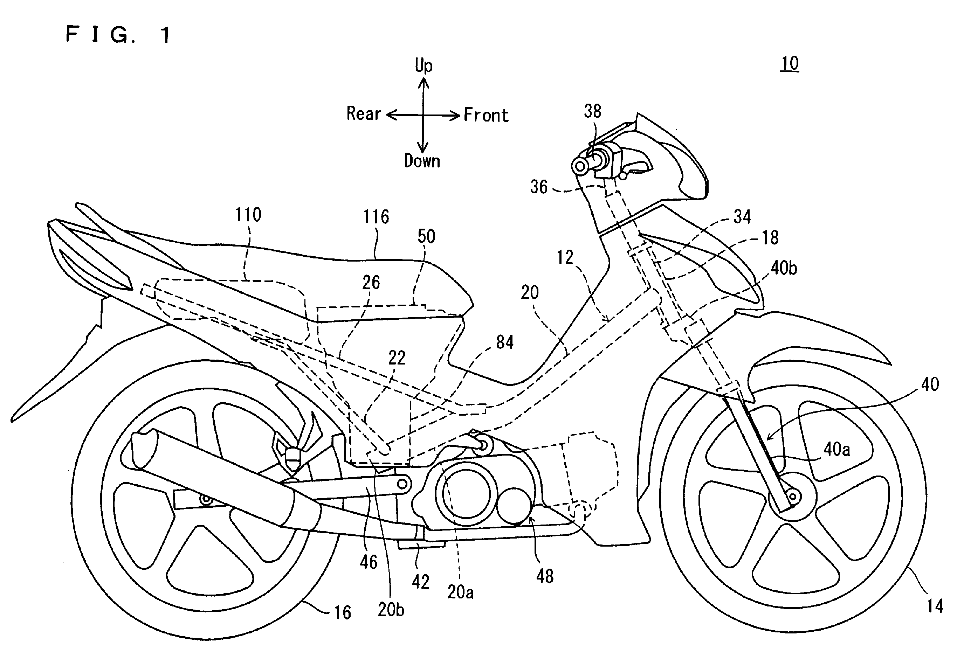

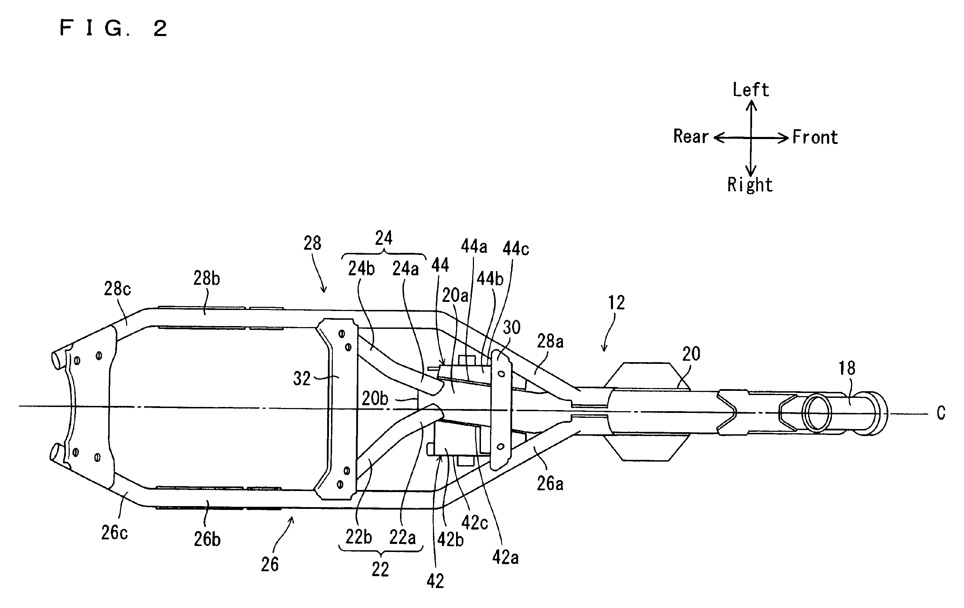

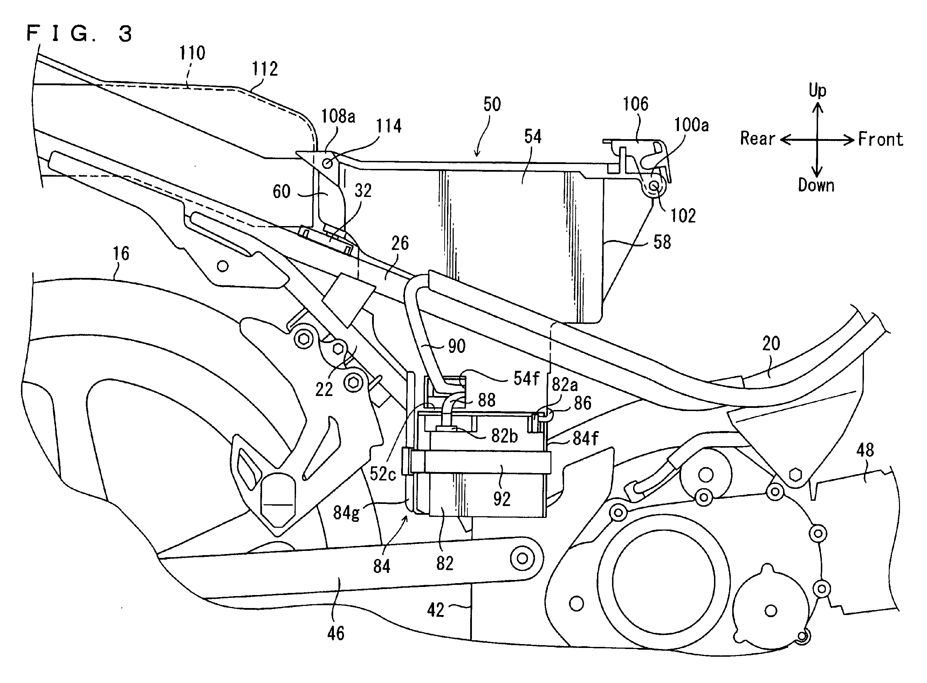

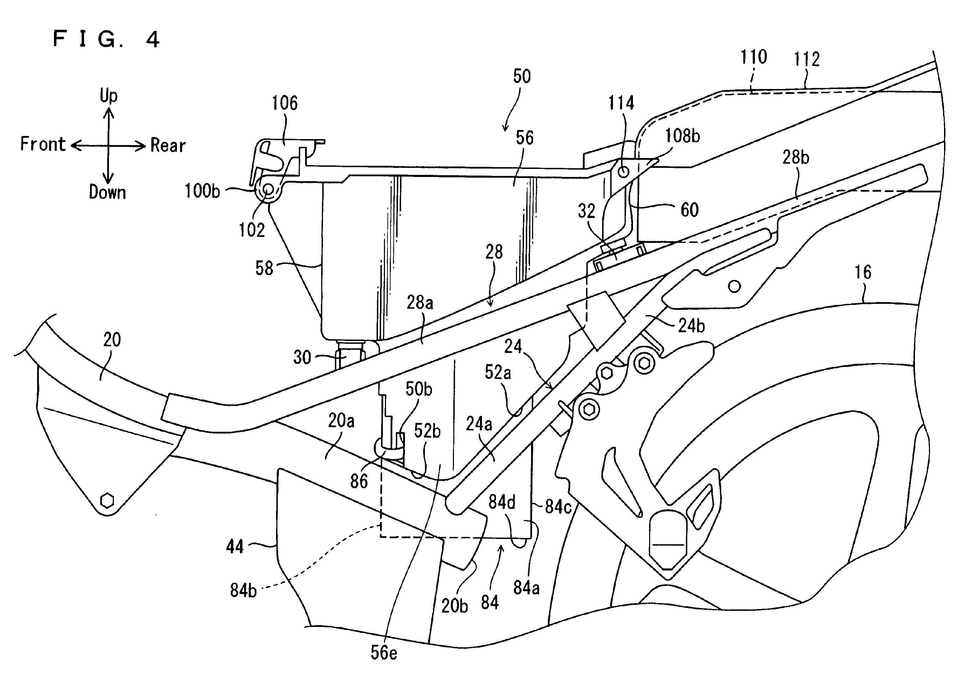

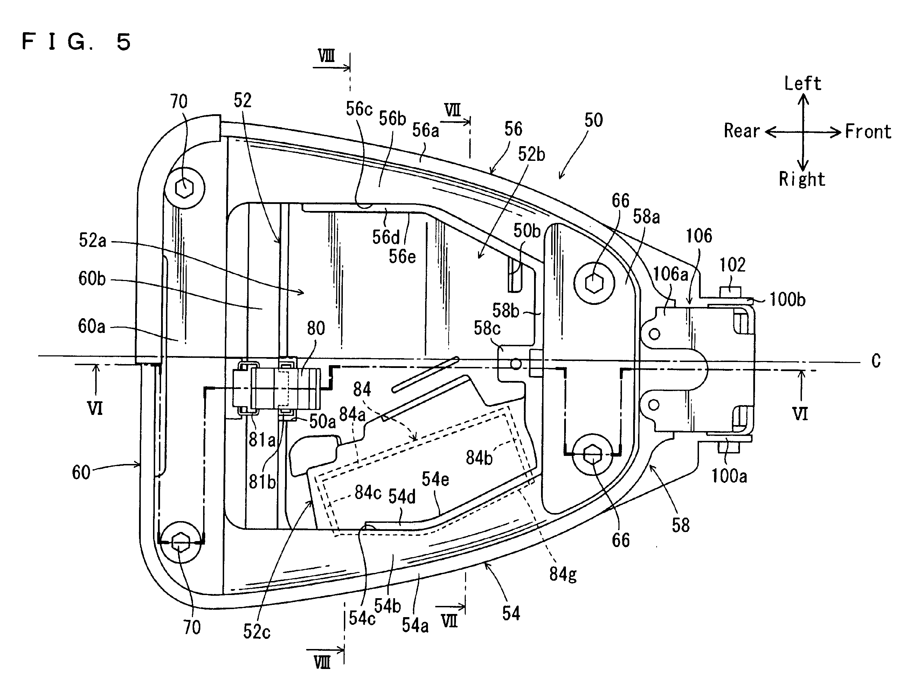

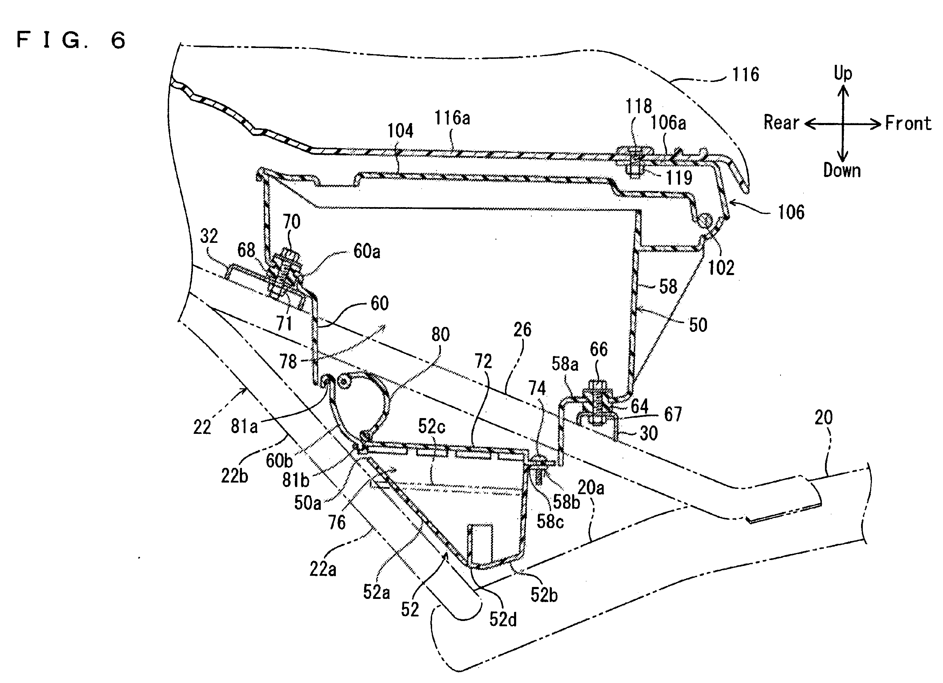

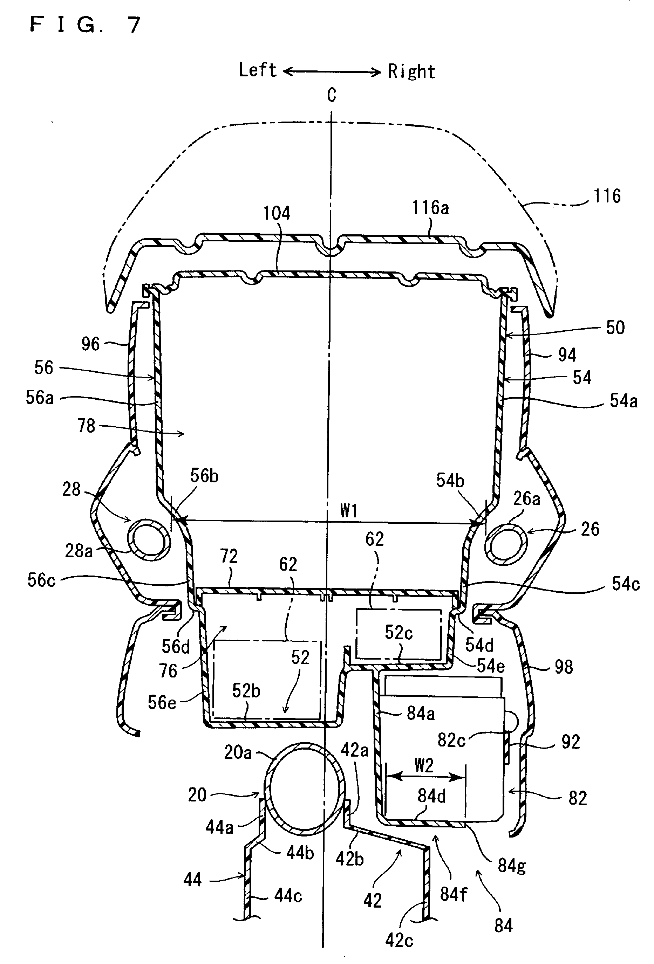

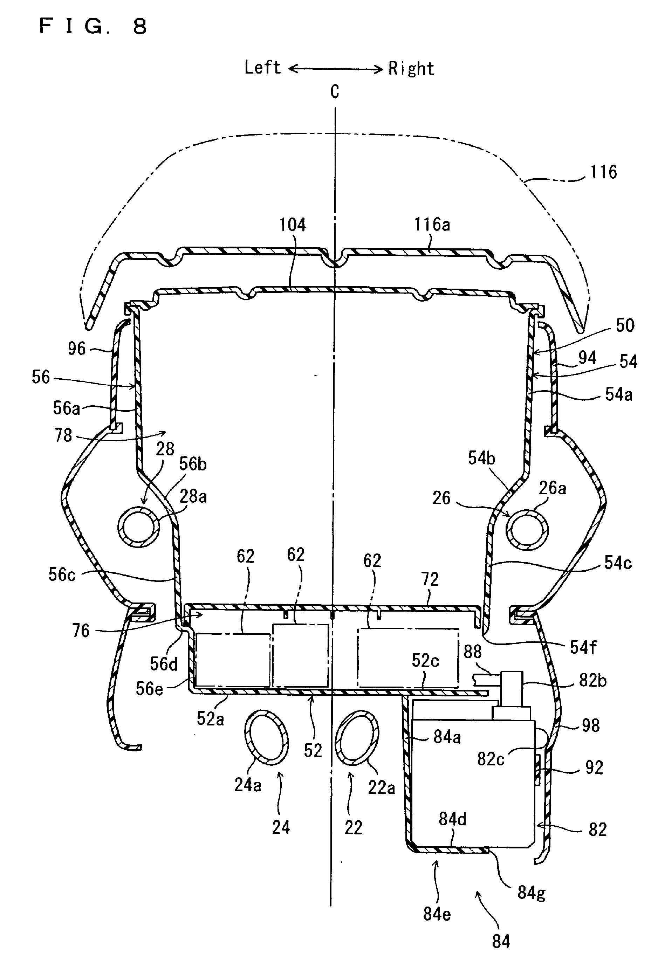

Hereinafter, preferred embodiments of the present invention will be described with reference to the drawings. It is noted that the terms left and right, front and rear, up and down as used in this embodiment are determined from the rider's position on a seat 116 of a motorcycle 10, with the rider facing toward a handlebar 36. Fig. 1 is a right side view of the motorcycle 10 according to an embodiment of the present invention. Fig. 2 is a plan view showing a frame 12 of the motorcycle 10. Fig. 3 is a right side view of a region in the motorcycle 10, where a storage case 50 is disposed: It should be noted that Fig. 3 does not show side covers 94, 96, 98, nor does it show the seat 116. Fig. 4 is a left side view of a region in the motorcycle 10, where the storage case 50 is disposed: It should be noted that Fig. 4 does not show side covers 94, 96, 98, nor does it show the seat 116, either. Fig. 5 is a plan view of the storage case 50. Fig. 5 does not show electric components 62 or an inner bottom plate 72, so as to show a bottom plate portion 52 of the storage case 50. Fig. 6 is an end view taken in lines VI-VI in Fig. 5. Fig. 7 is an end view taken in lines VII-VII in Fig. 5. Fig. 8 is an end view taken in lines VIII-VIII in Fig. 5.

Referring to Fig. 1, the motorcycle 10 includes the frame 12 extending in a fore-aft direction, a front wheel 14 and a rear wheel 16. Referring to Fig. 1 and Fig. 2, the frame 12 includes a head pipe 18, a main frame 20, a left-and-right pair of reinforcing frames 22, 24 (see Fig. 2), a left-and-right pair of seat frames 26, 28 (see Fig. 2), and cross members 30, 32 (see Fig. 2).

The head pipe 18 is provided at a front end portion of the frame 12, and extends straightly in an up-down direction with a slight forward tilt from top to bottom. Referring to Fig. 1, the head pipe 18 rotatably supports a steering shaft 34. The steering shaft 34 has an upper end, where the handlebar 36 is fixed, and the handlebar 36 has two end portions each provided with a grip 38.

A front fork 40 is provided at a lower end of the steering shaft 34. The front fork 40 has a left-and-right pair of suspensions 40a, and a bridge member 40b which provides bridging between upper ends of the pair of suspensions 40a. The steering shaft 34 has a lower end, which is fixed to the bridge member 40b. The suspensions 40a have lower end portions, which rotatably support the front wheel 14. The handlebar 36, the front fork 40 and the front wheel 14 are pivotable integrally with each other, about a pivotal axis provided by the steering shaft 34. Thus, the motorcycle 10 is steerable with the handlebar 36.

Referring to Fig. 1 and Fig. 2, the main frame 20 extends from the head pipe 18 in an obliquely rearward and downward direction. Referring to Fig. 2, as seen in the plan view, the main frame 20 has a rear portion 20a, which is bent in one direction (to the left in the present embodiment) off a center C (indicated by an alternate long and short dash line in Fig. 2) in a width direction of the motorcycle 10. Referring to Fig. 1, the main frame 20 has a rear end 20b, which is in front of the rear wheel 16. Referring to Fig. 1 and Fig. 2, platy brackets 42, 44 (see Fig. 2) extend downward from the rear portion 20a of the main frame 20. Referring to Fig. 2 and Fig. 7 which is to be described later, the bracket 42 has a fixing portion 42a extending in an up-down direction, a sloped portion 42b extending from a lower end of the fixing portion 42a in an obliquely right and downward direction, and a supporting portion 42c extending downward from a right end of the sloped portion 42b. Likewise, the bracket 44 has a fixing portion 44a extending in an up-down direction, a sloped portion 44b extending from a lower end of the fixing portion 44a in an obliquely left and downward direction, and a supporting portion 44c extending downward from a left end of the sloped portion 44b. The fixing portions 42a, 44a are fixed to an outer circumferential surface of the rear portion 20a of the main frame 20. In the width direction (left-and-right direction) of the motorcycle 10, the sloped portion 42b is longer than the sloped portion 44b.

Referring to Fig. 1, the brackets 42, 44 (see Fig. 2) pivotably support a forward end portion of a rearward extending rear arm 46. The rear wheel 16 is rotatably supported at a rear end portion of the rear arm 46 via a wheel shaft. An engine 48 is fixed at a more forward position than the brackets 42, 44 in the main frame 20. Driving power generated in the engine 48 is transmitted to the rear wheel 16 via unillustrated transmission members (a chain or a belt, etc.)

Referring to Fig. 1 and Fig. 2, the reinforcing frames 22, 24 extend from the rear portion 20a of the main frame 20 in an obliquely upward and rearward direction. As has been described, the rear end 20b of the main frame 20 is ahead of the rear wheel 16 (see Fig. 1), and the rear wheel 16 is obliquely below the reinforcing frames 22, 24 (see Fig. 2). Referring to Fig. 2, each of the reinforcing frames 22, 24 extends obliquely rearward in a widthwise outer direction of the motorcycle 10, so the reinforcing frames 22, 24 are spaced more from each other as they extend rearward. Specifically, the reinforcing frame 22 includes a front portion 22a which extends from the rear portion 20a of the main frame 20 in an obliquely right and rear direction; and a rear portion 22b which bends in a right direction from a rear end of the front portion 22a and extends in an obliquely right and rear direction. The reinforcing frame 24 includes a front portion 24a which extends from the rear portion 20a of the main frame 20 in an obliquely left and rear direction; and a rear portion 24b which bends in a left direction from a rear end of the front portion 24a and extends in an obliquely left and rear direction. A distance between the front portion 22a of the reinforcing frame 22 and the front portion 24a of the reinforcing frame 24 is shorter than a distance between the rear portion 22b of the reinforcing frames 22 and the rear portion 24b of the reinforcing frames 24.

The seat frames 26, 28 have their front ends connected with the main frame 20, at more forward positions than the reinforcing frames 22, 24 respectively. From the main frame 20, the seat frames 26, 28 extend in an obliquely rearward and upward direction, passing above the reinforcing frames 22, 24 in a side view. The reinforcing frames 22, 24 have their upper end portions (rear end portions) connected with the seat frames 26, 28 respectively.

The seat frame 26 has a front portion 26a which extends from the main frame 20 obliquely rearward in the widthwise outer direction (rightward in the present embodiment) of the motorcycle in a plan view; a straight portion 26b which bends at a rear end of the front portion 26a and extends straightly rearward; and a rear portion 26c which bends at a rear end of the straight portion 26b and extends obliquely rearward in a widthwise inner direction (leftward in the present embodiment) of the motorcycle. The straight portion 26b extends substantially in parallel to the fore-aft direction of the motorcycle 10. Likewise, the seat frame 28 has a front portion 28a which extends from the main frame 20 obliquely rearward in the widthwise outer direction (leftward in the present embodiment) of the motorcycle in a plan view; a straight portion 28b which bends at a rear end of the front portion 28a and extends straightly rearward; and a rear portion 28c which bends at a rear end of the straight portion 28b and extends obliquely rearward in the widthwise inner direction (rightward in the present embodiment) of the motorcycle. The straight portion 28b extends substantially in parallel to the fore-aft direction of the motorcycle 10. In a plan view, a distance between the front portion 26a of the seat frame 26 and the front portion 28a of the seat frame 28 becomes wider as it is measured at a more rearward position.

The cross member 30 extends in the width direction of the motorcycle 10 across the front portion 26a of the seat frame 26 and the front portion 28a of the seat frame 28. The cross member 32 extends in the width direction of the motorcycle 10 across the straight portion 26b of the seat frame 26 and the straight portion 28b of the seat frame 28.

Referring to Fig. 3, Fig. 4, Fig. 6, Fig. 7 and Fig. 8, the storage case 50 is disposed between the seat frame 26 and the seat frame 28. Referring to Fig. 6 through Fig. 8, the storage case 50 is open in an upward direction. The storage case 50 has the bottom plate portion 52 serving as a bottom portion of the storage case 50; a side wall portion 54 (see Fig. 7 and Fig. 8) extending upward from a right edge of the bottom plate portion 52; a side wall portion 56 (see Fig. 7 and Fig. 8) extending upward from a left edge of the bottom plate portion 52; a front wall portion 58 (see Fig. 6) extending upward from a front edge of the bottom plate portion 52; and a back wall portion 60 (see Fig. 6) extending upward from a rear edge of the bottom plate portion 52.

The storage case 50 extends downward beyond the seat frames 26, 28, and thus the bottom plate portion 52 is at a lower position than the seat frames 26, 28. Referring to Fig. 6, the bottom plate portion 52 has a first sloped bottom portion 52a, a second sloped bottom portion 52b and a flat bottom portion 52c.

Referring to Fig. 4, Fig. 6 and Fig. 8, the first sloped bottom portion 52a is formed to slope along the reinforcing frames 22, 24 (see Fig. 8). Referring to Fig. 6, the first sloped bottom portion 52a starts from its lower end portion 52d and extends in an obliquely upward and rearward direction. In a side view, the first sloped bottom portion 52a is substantially parallel to the reinforcing frames 22, 24 (see Fig. 8). The reinforcing frames 22, 24 (see Fig. 8) have their front portions 22a, 24a (see Fig. 8) under the first sloped bottom portion 52a. Referring to Fig. 8, the first sloped bottom portion 52a is wider than a distance between the front portion 22a of the reinforcing frame 22 and the front portion 24a of the reinforcing frame 24. Referring to Fig. 6, the first sloped bottom portion 52a has its lower end portion 52d above front ends of the reinforcing frames 22, 24. Referring to Fig. 5 and Fig. 6, in the storage case 50, an opening 50a is provided at a rear end region of the first sloped bottom portion 52a.

Referring to Fig. 4, Fig. 6 and Fig. 7, the second sloped bottom portion 52b is formed continuously from the lower end portion 52d (see Fig. 6) of the first sloped bottom portion 52a and to extend forward from the lower end portion 52d. In the present embodiment, the second sloped bottom portion 52b is above the main frame 20, with a slight upward sloping along the main frame 20.

Referring to Fig. 5, the flat bottom portion 52c is on a more right side than the center C in the width direction of the motorcycle 10. In a plan view, the flat bottom portion 52c is angled with respect to the fore-aft direction of the motorcycle 10. Referring to Fig. 3 and Fig. 6, the flat bottom portion 52c is substantially horizontal. Referring to Fig. 8, the flat bottom portion 52c is on a more right side than the reinforcing frame 22 and the first sloped bottom portion 52a. Referring to Fig. 6, the flat bottom portion 52c is located at a level which is lower than the upper end of the first sloped bottom portion 52a and is higher than the lower end of the first sloped bottom portion 52a. Also, referring to Fig. 7, the second sloped bottom portion 52b is located at a lower level than the flat bottom portion 52c. In the bottom plate portion 52 of the storage case 50, there is a step between the first sloped bottom portion 52a and the flat bottom portion 52c, and there is another step between the second sloped bottom portion 52b and the flat bottom portion 52c.

Referring to Fig. 7 and Fig. 8, a plurality of electric components 62 are disposed inside the storage case 50. In the present embodiment, the electric components 62 are disposed on the bottom plate portion 52. Specifically, the electric component (s) 62 are disposed on each of the first sloped bottom portion 52a, the second sloped bottom portion 52b and the flat bottom portion 52c. These electric components 62 include relays and fuses for example, and are connected with a battery 82 to be described later.

Referring to Fig. 2, as has been described, the front portions 26a, 28a of the seat frames 26, 28 extend from the main frame 20 obliquely rearward in the widthwise outer direction of the motorcycle in a plan view. Also, the distance between the front portions 26a, 28a of the seat frames 26, 28 becomes wider as it is measured at a more rearward position. Correspondingly to such a shape of the seat frames 26, 28 as described, a distance between the side wall portion 54 (see Fig. 5) and the side wall portion 56 (see Fig. 5) (i.e. a width of the storage case 50) becomes wider as it is measured at a more rearward position.

Referring to Fig. 5 and Fig. 7, the side wall portion 54 includes an upper portion 54a which extends in an up-down direction above the seat frame 26 (see Fig. 7); a curved portion 54b which curves from a lower end of the upper portion 54a in a direction aiming between the seat frame 26 and the center C and then extends downward; an intermediate portion 54c which extends downward from a lower end of the curved portion 54b; a flange portion 54d which extends from a lower end of the intermediate portion 54c toward the center C; and a lower portion 54e which extends downward from an inner edge of the flange portion 54d to the bottom plate portion 52. Referring to Fig. 8, at a rear end region of the side wall portion 54, an opening 54f is provided between the intermediate portion 54c and the bottom plate portion 52.

Referring to Fig. 5 and Fig. 7, the side wall portion 56 includes an upper portion 56a which extends in an up-down direction above the seat frame 28 (see Fig. 7) ; a curved portion 56b which curves from a lower end of the upper portion 56a in a direction aiming between the seat frame 28 and the center C and then extends downward; an intermediate portion 56c which extends downward from a lower end of the curved portion 56b; a flange portion 56d which extends from a lower end of the intermediate portion 56c toward the center C; and a lower portion 56e which extends downward from an inner edge of the flange portion 56d to the bottom plate portion 52.

Referring to Fig. 5 and Fig. 6, the front wall portion 58 has a flange portion 58a which extends in a left-and-right direction and is continuous to the curved portions 54b, 56b (see Fig. 5) of the side wall portions 54, 56 (see Fig. 5); and a flange portion 58b which extends in a left-and-right direction and is continuous to the flange portions 54d, 56d (see Fig. 5) of the side wall portions 54, 56 (see Fig. 5). The flange portion 58a is above the cross member 30 (see Fig. 6), facing an upper surface of the cross member 30. The flange portion 58b is at a lower and more rearward position than the flange portion 58a. A position of the flange portion 58b in an up-down direction is equal to respective positions of the flange portions 54d, 56d in the up-down direction. The flange portion 58b has a mounting portion 58c which protrudes rearward from its center region as found in a left-and-right direction.

The back wall portion 60 has a flange portion 60a which extends in a left-and-right direction and is continues to the curved portions 54b, 56b (see Fig. 5) of the side wall portions 54, 56 (see Fig. 5). The flange portion 60a is above the cross member 32 (see Fig. 6), facing an upper surface of the cross member 32.

Referring to Fig. 5 and Fig. 6, the flange portion 58a is fixed to the cross member 30 with bolts 66 and nuts 67 (see Fig. 6) via dampers 64 (see Fig. 6). The flange portion 60a is fixed to the cross member 32 with bolts 70 and nuts 71 (see Fig. 6) via dampers 68 (see Fig. 6). As a result, most part of the storage case 50 is disposed between the cross member 30 and the cross member 32, and the storage case 50 is supported by the seat frames 26, 28 (see Fig. 2) via the cross members 30, 32. It should be noted here with reference to Fig. 5, that the flange portion 58a is fixed to the cross member 30 at two positions which oppose to each other with respect to the center C in the width direction of the motorcycle 10. Likewise, the flange portion 60a is fixed to the cross member 32 at two positions which oppose to each other with respect to the center C.

Referring to Fig. 6 and Fig. 7, a substantially platy inner bottom plate 72, which is an individual member separate from the storage case 50, is provided inside the storage case 50. Specifically, the inner bottom plate 72 has its outer circumferential edge supported by the flange portion 58b (see Fig. 6) and the flange portions 54d, 56d (see Fig. 7). The inner bottom plate 72 is supported substantially horizontally. Referring to Fig. 6, the inner bottom plate 72 has a front edge, which is fixed to the mounting portion 58c of the flange portion 58b with a screw 74. The inner bottom plate 72 has a rear end portion, which is fitted into the opening 50a. The inner bottom plate 72 can be removed from the storage case 50 by removing the screw 74.

Referring to Fig. 6 through Fig. 8, the inner bottom plate 72 provides covering above the bottom plate portion 52. The inner bottom plate 72 has a plan-view shape corresponding to a plan-view shape of the bottom plate portion 52, and so the inner bottom plate 72 covers the entire space above the upper surface of the bottom plate portion 52. As a result, space inside the storage case 50 is partitioned by the inner bottom plate 72, into a storage chamber 76 which is below the inner bottom plate 72 and a storage chamber 78 which is above the inner bottom plate 72.

Referring to Fig. 4 and Fig. 5, the storage case 50 has a lower end region formed with a substantially L-shaped opening 50b. Specifically, the opening 50b extends from the lower portion 56e of the side wall portion 56 to the second sloped bottom portion 52b of the bottom plate portion 52, at a lower level than the inner bottom plate 72 (see Fig. 6). Namely, the opening 50b is provided in the storage chamber 76 (see Fig. 6).

As has been described, a plurality of electric components 62 are disposed on the bottom plate portion 52, so the inner bottom plate 72 provides covering over these electric components 62. Namely, the electric components 62 are disposed inside the storage chamber 76.

Referring to Fig. 7 and Fig. 8, the storage chamber 76 is at a lower position than the seat frames 26, 28. The inner bottom plate 72 is supported by the storage case 50, at a level higher than the first sloped bottom portion 52a, the second sloped bottom portion 52b and the flat bottom portion 52c, but at a level lower than the seat frames 26, 28.

It should be noted here that the storage case 50 stores such things as maintenance tools and documents (not illustrated) in addition to the electric components 62. Specifically, the tools, documents, etc. are stored mainly in the storage chamber 78. Referring to Fig. 5 and Fig. 6, a band 80 is connected to a lower portion 60b of the back wall portion 60 via connection rings 81a, 81b in the storage chamber 78, in order to hold the tools.

It should be noted here that when the motorcycle 10 is manufactured, the storage case 50 is placed between the seat frame 26 and the seat frame 28 from above the seat frames 26, 28. The seat frames 26, 28 extend rearward along the side wall portions 54, 56 respectively. As a result, as shown in Fig. 7, part of the storage case 50 which is at a lower position than the seat frames 26, 28 has a width that is smaller than a distance W1 between the seat frame 26 and the seat frame 28. Namely, a distance between the two intermediate portions 54c, 56c, a distance between the two flange portions 54d, 56d, and a distance between the two lower portions 54e, 56e are all smaller than the distance W1 between the seat frames 26, 28. Therefore, the storage chamber 76 has a smaller width than the distance W1 between the seat frames 26, 28. On the other hand, a distance between the upper portion 54a of the side wall portion 54 and the upper portion 56a of the side wall portion 56 is slightly greater than the distance W1 between the seat frames 26, 28. In the present embodiment, the upper portions 54a, 56a of the respective side wall portions 54, 56 are located above the seat frames 26, 28.

Referring to Fig. 1, Fig. 3 through Fig. 5, Fig. 7 and Fig. 8, the motorcycle 10 (see Fig. 1) has a battery case 84 for storing a battery 82 (see Fig. 3, Fig. 7 and Fig. 8). The battery case 84 is formed integrally with the storage case 50, and extends downward from the storage case 50. In a plan view, the battery case 84 is angled with respect to the fore-aft direction of the motorcycle 10. The battery case 84 has a box-like shape, and is open obliquely forward in the widthwise outer direction (rightward in the present embodiment) of the motorcycle. Referring to Fig. 7 and Fig. 8, in the bottom plate portion 52, the battery case 84 is located on a more outer side (on a more right-hand side in the present embodiment) than the main frame 20 (see Fig. 7) and the reinforcing frame 22 (see Fig. 8) in terms of the motorcycle's width direction. Referring to Fig. 4, especially in the present embodiment, the battery case 84 is located laterally (on a right-hand side in the present embodiment) of the front end of the reinforcing frame 22 (see Fig. 3).

Referring to Fig. 5, Fig. 7 and Fig. 8, the battery case 84 has a lateral wall portion 84a, a front wall portion 84b (see Fig. 5), a back wall portion 84c (see Fig. 5) and a bottom plate portion 84d (see Fig. 7 and see Fig. 8). Referring to Fig. 7 and Fig. 8, the lateral wall portion 84a extends downward from the flat bottom portion 52c of the bottom plate portion 52. Referring to Fig. 5, in a plan view, the lateral wall portion 84a is angled with respect to the fore-aft direction of the motorcycle 10 to be farther away from the center C as it extends rearward. The front wall portion 84b extends downward from the flat bottom portion 52c, and in an obliquely right and forward direction from a front end of the lateral wall portion 84a. The back wall portion 84c extends downward from the flat bottom portion 52c, and in an obliquely right and forward direction from a rear end of the lateral wall portion 84a. Referring to Fig. 4, Fig. 7 and Fig. 8, the bottom plate portion 84d is formed continuously from a lower end portion of the lateral wall portion 84a, a lower end portion of the front wall portion 84b (see Fig. 4), and a lower end portion of the back wall portion 84c (see Fig. 4), in substantially parallel to the flat bottom portion 52c (see Fig. 7 and Fig. 8). Referring to Fig. 7 and Fig. 8, the bottom plate portion 84d is opposed to the flat bottom portion 52c in an up-down direction, and is substantially horizontal like the flat bottom portion 52c. Thus, the battery 82 is held substantially horizontally in the battery case 84. It should be noted here that in the present embodiment, the flat bottom portion 52c serves as a ceiling portion of the battery case 84.

Referring to Fig. 4, the bottom plate portion 84d is located at a lower position than the front end of the reinforcing frame 22 (see Fig. 3) and the front end of the reinforcing frame 24. Referring to Fig. 1, as has been described, the platy bracket 42 is fixed to the rear portion 20a of the main frame 20. Referring to Fig. 7, the bottom plate portion 84d is above the sloped portion 42b of the bracket 42. There is a clearance provided between the battery case 84 and the bracket 42.

Referring to Fig. 8, the battery case 84 has a rear portion 84e, which is located outwardly widthwise (on the right-hand side in the present embodiment) of the motorcycle with respect to the front portion 22a of the reinforcing frame 22. Also, referring to Fig. 7, the battery case 84 has a front portion 84f, which is located outwardly widthwise (on the right-hand side in the present embodiment) of the motorcycle with respect to the main frame 20. It should be noted here that a clearance is provided between the battery case 84 and the reinforcing frames 22, as well as between the battery case 84 and the main frame 20.

Referring to Fig. 7, the second sloped bottom portion 52b of the storage case 50 is provided on at least one side (left side in the present embodiment) with respect to the center C in the width direction of the motorcycle, whereas the battery case 84 is provided on the other side (right side in the present embodiment) with respect to the center C in the width direction of the motorcycle. The second sloped bottom portion 52b is at a lower level than an upper surface of the battery case 84 (a lower surface of the flat bottom portion 52c). As has been described, the electric components 62 are disposed on the second sloped bottom portion 52b. Now, if the battery 82 disposed in the battery case 84 is the only load onto the bottom plate portion 52 of the storage case 50, the load is imbalanced in the width direction of the motorcycle. However, in the motorcycle 10, the electric components 62 are disposed on the second sloped bottom portion 52b, and the battery 82 is disposed in the battery case 84, i . e. , the electric components 62 places a load on one side of the bottom plate portion 52 whereas the battery 82 places another load on the other side of the bottom plate portion 52. The arrangement eliminates imbalanced loading onto the bottom plate portion 52 of the storage case 50 in the width direction of the motorcycle.

Referring to Fig. 7, the battery case 84 is located more closely to the center C than the seat frame 26. Namely, an edge 84g of the bottom plate portion 84d in the battery case 84 is closer to the center C than the seat frame 26. On the other hand, in the battery case 84, the battery 82 has its outer surface 82c located substantially at the same position as the seat frame 26 in the width direction of the motorcycle. Namely, the battery 82 has a greater width (a dimension in the motorcycle's width direction) than a width W2 of the bottom plate portion 84d.

It should be noted here that as has been described with reference to Fig. 2, the rear portion 20a of the main frame 20 is bent to one side (to the left in the present embodiment) with respect to the center C in the width direction of the motorcycle 10. In this case, referring to Fig. 7, the arrangement makes a large space available on a side (the right-hand side in the present embodiment) of the rear portion 20a of the main frame 20, for placement of the battery case 84. This makes it possible to give a large dimension to the width W2 of the bottom plate portion 84d in the battery case 84. The arrangement also makes it possible to position the lateral wall portion 84a of the battery case 84 more closely to the center C than in a case where the main frame has its rear portion on the center in the width direction of the motorcycle. This helps reduce an increase in the width of the motorcycle 10. It should be noted here with reference to Fig. 2, that since the rear portion 20a of the main frame 20 is off the center C and located on the left side, the front portions 22a, 24a of the respective reinforcing frames 22, 24 are also off the center C and located on the left side.

Referring to Fig. 3 and Fig. 4, as has been described, the storage chamber 76 (see Fig. 7) has an opening 50b (see Fig. 4) and an opening 54f (see Fig. 3). The opening 50b (see Fig. 4) and the opening 54f (see Fig. 3) are for a wire 86 and a wire 88 (see Fig. 3) which connected to the electric components 62 (see Fig. 7). The wire 86 comes out of the opening 50b (see Fig. 4), passes in front of the front wall portion 58, goes beyond the center C, onto the opposite side of the opening 50b, and is connected with a terminal 82a provided at a front region of the battery 82. Referring to Fig. 8, the opening 54f is provided in the side wall portion 54 which is on the same side as the battery case 84 (on the right side in Fig. 8) with respect to the center C. The wire 88 which comes out of the opening 54f is connected with a terminal 82b provided at a rear region of the battery 82. It should be noted here that the wires 86, 88 have an appropriate length in accordance with the distance from the respective openings 50b, 54f to the terminals 82a, 82b. Namely, the wire 86 coming out of the opening 50b does not reach the terminal 82b provided at the rear region of the battery 82 whereas the wire 88 coming out of the opening 54f does not reach the terminal 82a provided at the front region of the battery 82. Referring to Fig. 3, a wire harness 90 is provided along the main frame 20. The wire harness 90 is routed into the storage case 50 from the opening 54f.

Referring to Fig. 3, the battery case 84 is provided with a band 92 in order to fix the battery 82 to the battery case 84. The band 92 is placed from the front wall portion 84b of the battery case 84 to the back wall portion 84c of the battery case 84, so the battery 82 is held by the battery case 84 and the band 92.

Referring to Fig. 7 and Fig. 8, the storage case 50 is covered by the side covers 94, 96 from respective widthwise outer sides of the motorcycle. Likewise, the battery case 84 is covered by the lower side cover 98.

Referring to Fig. 3 through Fig. 5, a pair of supporting portions 100a, 100b are provided to extend forward from an upper end portion of the front wall portion 58 in the storage case 50. The supporting portions 100a, 100b are opposed to each other in a left-and-right direction. A shaft 102 extending in the left-and-right direction is inserted into through-holes provided in the supporting portions 100a, 100b. The shaft 102 is rotatably supported by the supporting portions 100a, 100b.

Referring to Fig. 6, an upper lid 104 is provided to close an upper end region of the storage case 50. The upper lid 104 has a front end portion rotatably supported by the shaft 102. Thus, the upper lid 104 is pivotable around the shaft 102. Namely, the upper lid 104 is openable/closable.

Referring to Fig. 3 through Fig. 5, the shaft 102 further supports a hinge 106 pivotably. Specifically, with reference to Fig. 5, the hinge 106 is disposed between the supporting portion 100a and the supporting portion 100b. The shaft 102 is inserted into through-holes (not illustrated) provided in the hinge 106. Thus, the hinge 106 is pivotable around the shaft 102.

Referring to Fig. 3 and Fig. 4, a pair of connecting portions 108a, 108b are provided to extend rearward from an upper end portion of the back wall portion 60 in the storage case 50. The connecting portions 108a, 108b are opposed to each other in a left-and-right direction.

Referring to Fig. 1, Fig. 3 and Fig. 4, a fuel tank 110 is provided at a more rearward position than the storage case 50. Referring to Fig. 3 and Fig. 4, a cover member 112 is placed to the fuel tank 110. The cover member 112 has a front end portion connected with the connecting portions 108a, 108b of the storage case 50, using a pair of screws 114.

Referring to Fig. 1, the seat 116 is provided above the storage case 50 and the fuel tank 110. Referring to Fig. 6, the seat 116 has a bottom plate portion 116a. The bottom plate portion 116a is formed of a resin for example. The bottom plate portion 116a has a front end portion which is fixed to an upper plate portion 106a of the hinge 106, with a bolt 118 and a nut 119. Thus, the seat 116 is pivotable around the shaft 102. Namely, the seat 116 is openable/closable.

In the motorcycle 10, the bottom plate portion 52 is included in the bottom portion; the first sloped bottom portion 52a is included in the first portion; the flat bottom portion 52c is included in the second portion; the second sloped bottom portion 52b is included in the third portion; the reinforcing frame 24 represents the one of the reinforcing frames; and the reinforcing frame 22 represents the other of the reinforcing frames.

Hereinafter, functions and advantages of the motorcycle 10 will be described.

In the motorcycle 10, the bottom plate portion 52 of the storage case 50 has the first sloped bottom portion 52a along the reinforcing frames 22, 24. In this case, it is possible to place the bottom plate portion 52 closely to the reinforcing frames 22, 24, and therefore it is possible to place the bottom plate portion 52 at a low position. Hence, it is possible to increase the storage capacity of the storage case 50.

Also, the battery case 84 is provided at an outer position than the reinforcing frame 22 in the width direction of the motorcycle. In this case, the reinforcing frame 22 is not an obstacle in such operations as replacing the battery 82, since no part of the reinforcing frame 22 is on an outer side of the battery case 84 in the motorcycle's width direction. This improves workability. Further, since the battery case 84 is open outwardly widthwise of the motorcycle, the arrangement further improves workability. Also, since the battery case 84 is disposed at an outer position than the reinforcing frame 22, it is possible to provide a greater clearance between the battery case 84 and the rear wheel 16 than in cases where a battery case is located between the reinforcing frame 22 and the reinforcing frame 24. In this case, it is possible to increase the size of the battery case 84 while ensuring a sufficient clearance between the battery case 84 and the rear wheel 16. Thus, it is possible to increase the storage capacity of the battery case 84.

The flat bottom portion 52c of the bottom plate portion 52 is located at a more outer position (on a more right-hand side in the present embodiment) at least than the reinforcing frame 22 in the width direction of the motorcycle. In this case, the flat bottom portion 52c can be used as the ceiling portion of the battery case 84, which simplifies the structure of battery case 84.

The flat bottom portion 52c used as the ceiling portion of the battery case 84 is formed to be substantially horizontal. This makes it easy to store the battery 82 while preventing decrease in storage capacity of the battery case 84.

Also, the flat bottom portion 52c is located at least above the reinforcing frame 22 in a side view. Namely, the flat bottom portion 52c used as the ceiling portion of the battery case 84 is located at least above the reinforcing frame 22. This makes it possible to give the battery case 84 a sufficient height in an up-down direction, and therefore to give a sufficient size to the battery case 84.

The inner bottom plate 72 which is provided inside the storage case 50 makes it easy to store tools, documents and the like, on the inner bottom plate 72. The arrangement makes it possible to reduce potential decrease in convenience of the storage case 50 even in cases where positioning the bottom portion 52 of the storage case 50 at a low level necessitates a need for forming steps, recesses, projections or the like on the bottom portion 52.

In the motorcycle 10, the electric components 62 which are connected with the battery 82 are disposed on the bottom plate portion 52 of the storage case 50. In this case, the electric components 62 and the battery 82 are located in proximity to each other, making it possible to route the wires 86, 88 easily, for connecting the electric components 62 with the battery 82.

In the motorcycle 10, the bottom portion 52 of the storage case 50 has the second sloped bottom portion 52b which is located at a lower level than the flat bottom portion 52c, and the second sloped bottom portion 52b is at least on one side (left side in the present embodiment) with respect to the center C (see Fig. 7). Also, the battery case 84 is located on the other side (the right side in the present embodiment) with respect to the center C. With this arrangement, the electric components 62 are placed on the second sloped bottom portion 52b. In this case, it is possible to put the load of the electric components 62 on one side of the bottom plate portion 52 while putting the load of the battery 84 on the other side of the bottom plate portion 52. The arrangement prevents imbalanced loading on the bottom plate portion 52 of the storage case 50 in the width direction of the motorcycle.

In the motorcycle 10, the battery case 84 is located laterally (on the right-hand side in the present embodiment) of the front end of the reinforcing frame 22. Now, in this arrangement, the reinforcing frame 22 extends in an obliquely rearward and rightward direction, and therefore the front end of the reinforcing frames 22 is located more on the center-C side in the width direction of the motorcycle 10 than the rear end of the reinforcing frame 22. Therefore, by disposing the battery case 84 laterally of the front end of the reinforcing frame 22, it is possible, and easy, to give the battery case 84 a large width (the width W2 of the bottom plate portion 84d) while preventing the motorcycle 10 from having an increased width.

In the motorcycle 10, the rear portion 20a of the main frame 20 bends, with respect to the center C in the width direction of the motorcycle 10, to one side (left side in the present embodiment), and the battery case 84 is located on the other side (right side in the present embodiment) with respect to the center C. In order to reduce possible increase in the width of the motorcycle 10, it is desirable that the battery case 84 is placed closely to the center C of the motorcycle 10 (see Fig. 2). Note, here, that in the motorcycle 10, the rear portion 20a of the main frame 20 bends to one side with respect to the center C of the motorcycle 10. Therefore, it is possible to position the battery case 84 more closely to the center C of the motorcycle 10 than in cases where the rear portion of the main frame is on the center in the width direction of the motorcycle. As a result, it is possible to reduce an increase in the width of the motorcycle 10. Also, since the rear portion 20a of the main frame 20 is bent to one side, it is possible to ensure a large space for placement of the battery case 84 on a side (right-hand side in the present embodiment) of the rear portion 20a of the main frame 20. This makes it possible to give a large dimension to the width of the battery case 84 (the bottom plate portion 84d).

It should be noted here that the present invention is not limited to the above-described motorcycle 10, but may be varied in many ways. For example, in the embodiment described above, the front portion 84f of the battery case 84 is located laterally of the main frame 20 and the rear portion 84e of the battery case 84 is located laterally of the reinforcing frame 22. However, the entire battery case 84 may be located laterally of the reinforcing frame 22. Namely, the front portion 84f of the battery case 84 may be at a more rearward position than the front end of the reinforcing frame 22.

Also, in the embodiment described above, the storage case 50 and the battery case 84 are formed integrally with each other as a single member. However, the storage case and the battery case may be formed as separate members.

In the embodiment described above, the storage chamber 76 which is formed beneath the inner bottom plate 72 is a storage for the electric components 62. However, the storage chamber 76 may store maintenance tools or the like instead of the electric components 62.

In the embodiment described above, description was made for a case where the rear portion 20a of the main frame 20 bends leftward. However, the rear portion of the main frame may be positioned on the center in the width direction of the motorcycle.

Also, the rear portion of the main frame may bend rightward. In this case, the storage case and the battery case should be in such an arrangement that the battery case is disposed on a more left side than the pair of reinforcing frames. For example, the storage case 50 and the battery case 84 described above may be inverted with respect to the center C (see Fig.8).

In the embodiment described above, description was made for a case where the flat bottom portion 52c is substantially horizontal. However, the flat bottom portion may be sloped in a side view. It should be noted here that preferably, the flat bottom portion is not sloped as sharply as the first sloped bottom portion 52a. In this case, it is possible to prevent the ceiling portion (the flat bottom portion) of the battery case 84 from having a large inclination, making it easy to store the battery 82 while preventing decrease in storage capacity of the battery case 84.

In the embodiment described above, description was made for a case where the inner bottom plate 72 is substantially horizontal. However, the inner bottom plate may be sloped in a side view. In this case, preferably, the inner bottom plate is not sloped as sharply as the first sloped bottom portion 52a.

In the embodiment described above, description was made for a case where, fasteners are provided by the bolts 66, 70, 118, nuts 67, 71, 119, and screws 74, 114. However, other fasteners such as pins may be used.

In the present invention, the first portion in the bottom portion of the storage case may be stepped or curved.

Also, in the present invention, the second portion of the bottom portion in the storage case may have recesses and projections.

Also, in the present invention, the third portion of the bottom portion in the storage case may be substantially horizontal.

The present invention is applicable to many different kinds of motorcycles (including motor scooters and mopeds) having a frame structure like the one in the motorcycle 10.

### LEGEND

- 10: Motorcycle
- 12: Frame
- 14: Front wheel
- 16: Rear wheel
- 18: Head pipe
- 20: Main frame
- 22, 24: Reinforcing frames
- 26, 28: Seat frames
- 30, 32: Cross members
- 34: Steering shaft
- 42, 44: Brackets
- 50: Storage case
- 50a, 50b, 54f: Openings
- 52, 84d: Bottom plate portions
- 52a: First sloped bottom portion
- 52b: Second sloped bottom portion
- 52c: Flat bottom portion
- 52d: Lower end portion
- 54, 56: Side wall portions
- 54a, 56a: Upper portions
- 54d, 56d: Flange portions
- 58, 84b: Front wall portions
- 60, 84c: Back wall portions
- 62: Electric component
- 72: Inner bottom plate
- 82: Battery
- 84: Battery case
- 84a: Lateral wall portion
- 84e: Rear portion
- 84f: Front portion
- 86, 88: Wires
- 104: Upper lid
- 116: Seat

## Claims

1. A motorcycle (10) comprising:
a head pipe (18);
a main frame (20) extending from the head pipe (18) in an obliquely rearward and downward direction;
a pair of reinforcing frames (22, 24) disposed side by side in a left-and-right direction and extending from a rear portion (20a) of the main frame (20) in an obliquely rearward and upward direction;
a pair of seat frames (26, 28) disposed side by side in the left-and-right direction and extending from the main frame (20) in an obliquely rearward and upward direction to pass above the reinforcing frames (22, 24) in a side view, the reinforcing frames (22, 24) having their respective upper end portions connected with the seat frames (26, 28);
a rear wheel (16) provided behind the main frame (20);
a storage case (50) provided at least between the seat frames (26, 28); and
a battery case (84) extending downward from a bottom portion (52) of the storage case (50);
the bottom portion (52) including a first portion (52a) located along one of the reinforcing frames (22, 24) in the side view; and a second portion (52c) located on an outer side in the width direction than the other of the reinforcing frames (22, 24),
**characterized in that** the battery case (84) opening outward in a width direction of the motorcycle (10); and
the battery case (84) extending downward from the second portion (52c), on said outer side in the width direction than said other of the reinforcing frames (22, 24).

2. The motorcycle (10) according to Claim 1, wherein the second portion (52c) is located above said other of the reinforcing frames (22, 24) in the side view.

3. The motorcycle (10) according to Claim 1 or 2, further comprising an inner bottom plate (72) provided inside the storage case (50), covering above the bottom portion (52).

4. The motorcycle (10) according to one of Claims 1 through 3, further comprising a battery (82) stored in the battery case (84); and an electric component (62) connected with the battery (82);
wherein the electric component (62) is placed on the bottom portion (52) of the storage case (50).

5. The motorcycle (10) according to Claim 4, wherein the bottom portion (52) of the storage case (50) includes a third portion (52b) located at a lower level than the second portion (52c), the third portion (52b) being on one side with respect to a center in the width direction of the motorcycle (10),
the battery case (84) being on the other side with respect to the center,
the electric component (62) being placed on the third portion (52b).

6. The motorcycle (10) according to one of Claims 1 through 5, wherein the battery case (84) is located laterally of a front end of said other of the reinforcing frames (22, 24).

7. The motorcycle (10) according to one of Claims 1 through 6, wherein the rear portion (20a) of the main frame (20) bends to one side with respect to a center in the width direction of the motorcycle (10),
the battery case (84) being on the other side with respect to the center.

## Patentansprüche

1. Motorrad (10), umfassend:
ein Lenkkopfrohr (18);
einen Hauptrahmen (20), der sich von dem Lenkkopfrohr (18) schräg nach hinten und unten erstreckt;
ein Paar von Verstärkungsrahmen (22, 24), die links und rechts nebeneinander angeordnet sind, und die sich von einem hinteren Abschnitt (20a) des Hauptrahmens (20) schräg nach hinten und oben erstrecken;
ein Paar von Sitzrahmen (26, 28), die links und rechts nebeneinander angeordnet sind und sich von dem Hauptrahmen (20) schräg nach hinten und oben erstrecken, so dass diese über die Verstärkungsrahmen (22, 24) in einer Seitenansicht gesehen hinweggehen und die Verstärkungsrahmen (22, 24) mit deren jeweiligen oberen Endabschnitten mit den Sitzrahmen (26, 28) verbunden sind;
ein Hinterrad (16), das hinter dem Hauptrahmen (20) vorgesehen ist;
einen Aufbewahrungsbehälter (50), der zumindest zwischen den Sitzrahmen (26, 28) vorgesehen ist, und
ein Batteriegehäuse (84), das sich von einem unteren Abschnitt (52) des Aufbewahrungsbehälters (50) nach unten erstreckt;
wobei der untere Abschnitt (52) einen ersten Abschnitt (52a) umfasst, der an einem der Verstärkungsrahmen (22, 24) in der Seitenansicht gesehen platziert ist;
und einen zweiten Abschnitt (52c), der weiter außen in Breitenrichtung gesehen platziert ist als der andere der Verstärkungsrahmen (22, 24),
**dadurch gekennzeichnet, dass** das Batteriegehäuse (84) sich in die Breitenrichtung des Motorrades (10) öffnet; und
das Batteriegehäuse (84) sich von dem zweiten Abschnitt (52c) in Richtung der Breite gesehen auf der weiter außen gelegenen Seite als der jeweils andere der Verstärkungsrahmen (22, 24) nach unten erstreckt.

2. Motorrad (10) nach Anspruch 1, wobei der zweite Abschnitt (52c) in der Seitenansicht über dem jeweils anderen der Verstärkungsrahmen (22, 24) angeordnet ist.

3. Motorrad (10) nach Anspruch 1 oder 2, ferner umfassend eine innere Bodenplatte (72), die innerhalb des Aufbewahrungsbehälters (50) vorgesehen ist und den unteren Abschnitt (52) abdeckt.

4. Motorrad (10) nach einem der Ansprüche 1 bis 3, ferner umfassend eine Batterie (82), die im Batteriegehäuse (84) untergebracht ist; und ein elektrisches Bauteil (62), das mit der Batterie (82) verbunden ist;
wobei das elektrische Bauteil (62) auf dem unteren Abschnitt (52) des Aufbewahrungsbehälters (50) angeordnet ist.

5. Motorrad (10) nach Anspruch 4, wobei der untere Abschnitt (52) des Aufbewahrungsbehälters (50) einen dritten Abschnitt (52b) umfasst, der auf einem niedrigeren Niveau als der zweite Abschnitt (52c) angeordnet ist, wobei der dritte Abschnitt (52b) auf einer Seite in Bezug auf eine Mittellinie in der Richtung der Breite des Motorrads (10) ist, und das Batteriegehäuse (84) auf der anderen Seite in Bezug auf die Mittellinie ist, und das elektrische Bauteil (62) auf dem dritten Abschnitt (52b) angeordnet ist.

6. Motorrad (10) nach einem der Ansprüche 1 bis 5, wobei das Batteriegehäuse (84) mindestens seitlich an einem vorderen Ende des jeweils anderen Verstärkungsrahmens (22, 24) angeordnet ist.

7. Motorrad (10) nach einem der Ansprüche 1 bis 6, wobei der hintere Abschnitt (20a) des Hauptrahmens (20) in Richtung einer Seite in Bezug auf eine Mittellinie in der Richtung der Breite des Motorrades (10) gebogen ist, und das Batteriegehäuse (84) auf der anderen Seite in Bezug auf die Mittellinie ist.

## Revendications

1. Une motocyclette (10) comprenant :
un tube en tête (18),
un cadre principal (20) s'étendant du tube en tête (18) dans la direction en biais vers l'arrière et vers le bas,
une paire de cadres de renforcement (22, 24) disposés côte à côte dans une direction vers la gauche et vers la droite et s'étendant depuis une partie arrière (20a) du cadre principal (20) dans une direction en biais vers l'arrière et vers le haut et,
une paire de cadres de siège (26, 28) disposés côte à côte dans une direction vers la gauche et vers la droite et s'étendant depuis le cadre principal (20) dans une direction en biais vers l'arrière et vers le haut afin de passer par-dessus les cadres de renforcement (22, 24) dans une vue latérale, les cadres de renforcement (22, 24) ayant leurs parties d'extrémité supérieure respectives raccordées aux cadres de siège (26, 28),
une roue arrière (16) utilisée derrière le cadre principal (20),
un casier de stockage (50) prévu au moins entre les cadres de siège (26, 28) et un boîtier de batterie (84) s'étendant vers le bas depuis une partie inférieure (52) du casier de stockage (50),
la partie inférieure (52) incluant une première partie (52a) située le long de l'un des cadres de renforcement (22, 24) dans la vue latérale, ainsi qu'une deuxième partie (52c) située sur un côté externe dans la direction de la largeur par rapport à l'autre des cadres de renforcement (22, 24),
**caractérisé en ce que** le boîtier de batterie (84) s'ouvre vers l'extérieur dans la direction de la largeur de la motocyclette (10), et
le boîtier de batterie (84) s'étend vers le bas à partir de la deuxième partie (52c) sur ledit côté externe dans la direction de la largeur par rapport au dit autre des cadres de renforcement (22, 24).

2. Motocyclette (10) selon la revendication 1, dans laquelle la deuxième partie (52c) est située au-dessus dudit autre des cadres de renforcement (22, 24) dans la vue latérale.

3. Motocyclette (10) selon la revendication 1 ou 2, comprenant en outre une plaque interne inférieure (72) prévue à l'intérieur du casier de stockage (50) en couverture au-dessus de la partie inférieure (52).

4. Motocyclette (10) selon l'une des revendications 1 à 3, comprenant en outre une batterie (82) stockée dans le boîtier de batterie (84), ainsi qu'un composant électrique (62) raccordé à la batterie (82),
dans lequel le composant électrique (62) est placé sur la partie inférieure (52) du casier de stockage (50).

5. Motocyclette (10) selon la revendication 4, dans laquelle la partie inférieure (52) du casier de stockage (50) inclut une troisième partie (52b) située à un niveau plus bas que celui de la deuxième partie (52c), la troisième partie (52b) se trouvant sur un côté par rapport au centre dans la direction de la largeur de la motocyclette (10),
le boîtier de batterie (84) se trouvant sur l'autre côté par rapport au centre,
le composant électrique (62) étant placé sur la troisième partie (52b).

6. Motocyclette (10) selon l'une des revendications 1 à 5, dans lequel le boîtier de batterie (84) est situé sur la partie latérale de l'extrémité avant dudit autre des cadres de renforcement (22, 24).

7. Motocyclette (10) selon l'une des revendications 1 à 6, dans lequel la partie arrière (20a) du cadre principal (20) est cintrée vers un côté par rapport au centre dans la direction de la largeur de la motocyclette (10),
le casier de batterie (84) se trouvant sur l'autre côté par rapport au centre.
